# EUROPÄISCHE PATENTSCHRIFT

(11) **EP 3 510 416 B1**
(45) Veröffentlichungstag und Bekanntmachung des Hinweises auf die Patenterteilung: **09.07.2025**
(21) Anmeldenummer: 17768347.1
(22) Anmeldetag: 08.08.2017
(51) Int. Cl.: G01S 7/533, G01S 7/00

(54) **VERFAHREN ZUM ÜBERTRAGEN VON SONARDATEN AN EINE AUSWERTEEINHEIT EINER SONARANLAGE EINES UNTERWASSERFAHRZEUGS SOWIE SONARANLAGE DAFÜR**
METHOD FOR TRANSMITTING SONAR DATA TO AN EVALUATION UNIT OF A SONAR SYSTEM OF AN UNDERWATER VEHICLE AND SONAR SYSTEM THEREFOR
PROCÉDÉ DE TRANSMISSION DE DONNÉES SONAR À UNE UNITÉ D'ÉVALUATION D'UN SYSTÈME SONAR D'UN VÉHICULE SOUS-MARIN ET SYSTÈME SONAR AFFÉRENT

(30) Priorität: 08.09.2016 DE 102016116821
(43) Veröffentlichungstag der Anmeldung: 17.07.2019
(73) Patentinhaber: ATLAS ELEKTRONIK GmbH, 28309 Bremen (DE)
(72) Erfinder: ISSERSTEDT, Thorsten, 26127 Oldenburg (DE)
(74) Vertreter: thyssenkrupp Intellectual Property GmbH
(86) Internationale Anmeldenummer: PCT/DE2017/100670
(87) Internationale Veröffentlichungsnummer: WO 2018/046044

(56) Entgegenhaltungen:
- EP-A1- 2 950 451
- US-A1- 2011 099 295
- MARCO ZORA ET AL: "Acoustic Signals Monitoring in Shallow Marine Waters: Technological Progress for Scientific Data Acquisition", PROCEDIA EARTH AND PLANETARY SCIENCE, vol. 4, 2011, pages 80 - 92, XP028392171, ISSN: 1878-5220, [retrieved on 20111208], DOI: 10.1016/J.PROEPS.2011.11.009

## Beschreibung

Die Erfindung betrifft den Bereich der Sonaranlagen von Unterwasserfahrzeugen, die zum Empfangen von Unterwasserschall dienen.

Gemäß dem Stand der Technik sind Unterwasserfahrzeuge mit Sonaranlagen bekannt, wobei mit den Sonaranlagen Schallwellen, die sich unter Wasser ausbreiten, empfangen werden. In der allgemeinen Literatur wird zwischen passiven und aktiven Sonaranlagen unterschieden. Passive Sonaranlagen dienen ausschließlich dem Empfang von Schallwellen, wobei aktive Sonaranlagen - zusätzlich zum Empfangen von Schallwellen - auch eingerichtet sind, Schallwellen auszusenden.

US 2011/099295 A1 offenbart das Übertragen digitalisierter Sonardaten an einen externen Prozessor. Die Daten werden für die Übertragung auf Basis eines Quantisierungsprofils quantisiert und komprimiert, wobei das Profil an eine gewünschte Qualitätsmetrik oder Bitrate angepasst werden kann.

EP 2 950 451 A1 offenbart eine komprimierte Übertragung von Sensordaten (Radar oder Ultraschall) eines Straßenfahrzeugs. Es erfolgt eine verlustbehaftete Kompression, bei der wichtigere Daten weniger stark komprimiert werden; diese wichtigeren Daten beziehen sich beispielsweise auf Ziele mit höherer Geschwindigkeit oder geringerer Distanz.

Im Folgenden soll der Begriff Sonaranlage sowohl eine aktive, als auch eine passive Sonaranlage umfassen, wobei sich die Erfindung auf die Signalverarbeitung beim Empfangen von Unterwasserschall bezieht.

Sonaranlagen weisen eine oder mehrere Unterwasserantennen mit einer Vielzahl von Unterwasserschallempfängern, nämlich sogenannten Hydrophonen, auf. Die Hydrophone sind mit einer Auswerteeinheit elektrisch verbunden, um die mit den Hydrophonen aufgenommenen Signale an die Auswerteeinheit zu übertragen. Mit der Auswerteeinheit können dann die empfangenen Schallwellen basierend auf den mit den Hydrophonen aufgenommenen Hydrophonsignalen beispielsweise grafisch oder akustisch dargestellt werden.

Durch zunehmende Rechnerleistung und die damit einhergehenden zunehmenden Möglichkeiten bei der Auswertung der Signale der Hydrophone in der Auswerteeinheit werden immer größere Datenübertragungsraten zwischen den Hydrophonen und der Auswerteeinheit gewünscht. Der Wunsch nach höheren Datenübertragungsraten wird zudem dadurch verstärkt, dass auch die Anzahl der eingesetzten Hydrophone in einer Unterwasserantenne zunimmt, da heutzutage immer kleinere Hydrophone zur Verfügung stehen.

Es ist jedoch bekannt, dass durch die physikalischen Eigenschaften einer elektrischen Leitung - wie beispielsweise dem Leitungsquerschnitt - die Datenübertragungsrate der elektrischen Leitung begrenzt ist. Demnach müssen also - wenn die elektrischen Leitungen zur Verbindung der Hydrophone mit der Auswerteeinheit heute im Hinblick auf ihre maximale Datenübertragungsrate vollends ausgeschöpft sind - zur Erhöhung der gewünschten Datenübertragungsrate beispielsweise weitere elektrische Leitungen oder elektrische Leitungen mit vergleichsweise größerem Leitungsquerschnitt verwendet werden.

Die soeben genannten Maßnahmen zur Erhöhung der Datenübertragungsrate sind jedoch im Bereich der Unterwasserfahrzeuge nicht ohne Weiteres ausführbar. Es muss nämlich beachtet werden, dass Hydrophonen an der Außenseite des Druckkörpers des Unterwasserfahrzeugs und die Auswerteeinheit im Inneren des Druckkörpers angeordnet ist. Daher müssen die elektrischen Leitungen zum elektrischen Verbinden der Hydrophone mit der Auswerteeinheit bei einer Sonaranlage durch den Druckkörper des Unterwasserfahrzeugs führen. Öffnungen des Druckkörpers zum Durchführen der elektrischen Leitungen stellen jedoch eine Schwachstelle im Druckkörper dar und müssen daher möglichst klein gewählt bzw. die Anzahl der Öffnungen gering gehalten werden.

Im Falle einer Sonaranlage eines Unterwasserfahrzeugs wären demnach vergleichsweise größere Öffnungen oder eine vergleichsweise größere Anzahl von Öffnungen im Drucckörper des Unterwasserfahrzeugs nötig, um Signale von Hydrophonen mit einer höheren Datenübertragungsrate von den Hydrophonen zur Auswerteeinheit zu übertragen. Eine Vergrößerung derartiger Öffnungen oder ein Hinzufügen von weiteren Öffnungen würde jedoch zu zunehmender Instabilität des Druckkörpers führen und ist daher unerwünscht.

Es ist daher Aufgabe der vorliegenden Erfindung ein Verfahren und eine Vorrichtung anzugeben, die es ermöglicht eines der zuvor zum Stand der Technik genannten Probleme zu beheben. Insbesondere soll eine Sonaranlage und ein Verfahren für eine Sonaranlage eines Unterwasserfahrzeugs gefunden werden, bei der die zunehmende Menge an Daten, die von Hydrophonen bereitgestellt werden, an eine Auswerteeinheit übertragen werden können, möglichst ohne die physikalischen Eigenschaften der elektrischen Verbindungsleitungen zu verändern oder die Anzahl der Verbindungsleitungen zu erhöhen.

Hierzu wird ein Verfahren zum Übertragen von Sonardaten an eine Auswerteeinheit einer Sonaranlage eines Unterwasserfahrzeugs gemäß Anspruch 1 vorgeschlagen.

Gemäß dem Verfahren werden zunächst Schallwellen mit mehreren Hydrophonen in Hydrophonsignale umgewandelt. Das heißt jedes Hydrophon erzeugt an seinem Ausgang ein Hydrophonsignal, das für die Schallwellen repräsentativ ist.

Die Hydrophonsignale werden dann einer Mikrocontrollerschaltung zugeführt, die die Hydrophonsignale in Sonardaten umwandelt. Vorzugsweise ist die Mikrocontrollerschaltung im Bereich der Hydrophone oder zumindest außerhalb eines Druckkörpers eines Unterwasserfahrzeugs, das die Sonaranlage aufweist, angeordnet. Die Mikrocontrollerschaltung weist Signaleingänge auf, denen die Hydrophonsignale zugeführt werden. Außerdem weist die Mikrocontrollerschaltung Ausgänge auf, aus denen die Sonardaten ausgegeben werden. Die Sonardaten werden einer Auswerteeinheit der Sonaranlage zugeführt und mit der Auswerteeinheit ausgewertet.

Beim Umwandeln der Hydrophonsignale in Sonardaten in der Mikrocontrollerschaltung werden die Hydrophonsignale digitalisiert und komprimiert. Zum Komprimieren wird ein Kompressionsverfahren verwendet. Erfindungsgemäß wird das beim Komprimieren aktuell verwendete Kompressionsverfahren in Abhängigkeit der Hydrophonsignale durch die Mikrocontrollerschaltung ausgetauscht.

Demnach ist also das bei der Kompression verwendete Kompressionsverfahren austauschbar oder variierbar. Die Mikrocontrollerschaltung ist nun eingerichtet, das Kompressionsverfahren abhängig von den Hydrophonsignalen, die vorzugsweise über einen in der Vergangenheit liegenden Zeitraum betrachtet werden, auszutauschen.

Ein aktuell verwendetes Kompressionsverfahren wird demnach zum Beispiel durch ein neues Kompressionsverfahren, das vom aktuell verwendeten Kompressionsverfahren unterschiedlich ist, ersetzt, so dass das neue Kompressionsverfahren nach dem Ersetzen beim Komprimieren als aktuelles Kompressionsverfahren eingesetzt wird.

Dabei wird ausgenutzt, dass in verschiedenen Empfangsszenarien in vorteilhafter Weise verschiedene Kompressionsverfahren zu einer optimalen Komprimierung, vorzugsweise einer verlustfreien Komprimierung, führen. In einem stationären Zustand, bei dem ein Unterwasserfahrzeug mit der Sonaranlage sowie Ziele in der Umgebung des Unterwasserfahrzeugs unveränderte Positionen zueinander aufweisen, ist ein bestimmtes Kompressionsverfahren einsetzbar, das in dieser Situation zu einem höheren Kompressionsgrad führt, als ein anderes Kompressionsverfahren. Hingegen führt das andere Kompressionsverfahren jedoch bei einem anderen Szenario oder in einer anderen Situation, bei der sich die Ziele schnell bewegen, zu einem vergleichsweise höheren Kompressionsgrad.

Durch den Austausch des Kompressionsverfahrens in Abhängigkeit des vorliegenden Szenarios, das vorzugsweise indirekt auf Grundlage bereits empfangener Hydrophonsignale von der Mikrocontrollerschaltung identifiziert werden kann, ist somit bei verschiedenen Empfangssituationen immer ein vergleichsweise hoher Grad der Komprimierung möglich.

Im Gegensatz zu einer universellen Komprimierung, die also in jeder Situation das gleiche Kompressionsverfahren nutzt und damit zu teilweise schlechten Kompressionsgraden führt, werden gemäß der Erfindung also mehrere Kompressionsverfahren verwendet, die angepasst an das Szenario und bei Auswahl während eines vorliegenden Szenarios zu einem vergleichsweise höheren Kompressionsgrad führen.

Da also nun der Kompressionsgrad insgesamt und kontinuierlich über verschiedene mögliche Szenarien erhöht wird, ist gleichzeitig eine vergleichsweise höhere Menge an Daten mit vergleichsweise unveränderten Übertragungsleitungen übertragbar.

Gemäß einer ersten Ausführungsform sind mehrere verschiedene Kompressionsverfahren in der Mikrocontrollerschaltung, zum Beispiel in einem Speicher der Mikrocontrollerschaltung, hinterlegt. In Abhängigkeit der Hydrophonsignale wählt die Mikrocontrollerschaltung dann eines der hinterlegten Kompressionsverfahren aus und verwendet das ausgewählte Kompressionsverfahren als aktuelles Kompressionsverfahren beim Komprimieren der Hydrophonsignale.

Demnach sind für verschiedene Szenarien Kompressionsverfahren bereits in der Mikrocontrollerschaltung hinterlegt. Die hinterlegten Kompressionsverfahren können dann durch einfaches Auswählen des jeweiligen Kompressionsverfahrens als aktuelles Kompressionsverfahren verwendet werden. Gemäß einer weiteren Ausführungsform erzeugt die Mikrocontrollerschaltung ein Kompressionsverfahren in Abhängigkeit der Hydrophonsignale, wobei das erzeugte Kompressionsverfahren dann beim Komprimieren der Hydrophonsignale verwendet wird. Anstatt lediglich auf verschiedene bereits fest vorgegebene Kompressionsverfahren zurückgreifen zu müssen, die bereits in der Mikrocontrollerschaltung hinterlegt sind, ist die Mikrocontrollerschaltung gemäß dieser Ausführungsform daher zusätzlich in der Lage eigene Kompressionsverfahren situationsabhängig, nämlich in Abhängigkeit der Hydrophonsignale, zu erzeugen und als aktuelles Kompressionsverfahren zu verwenden.

Eine hohe Flexibilität und Anpassungsfähigkeit der Kompressionsverfahren an verschiedene Szenarien, die durch die Hydrophonsignale abgebildet und die in der Mikrocontrollerschaltung anhand der Hydrophonsignale erkannt werden, ist somit möglich.

Gemäß einer weiteren Ausführungsform erfolgt das Auswählen oder Erzeugen des Kompressionsverfahrens in Abhängigkeit der Hydrophonsignale durch Schätzung zukünftiger Hydrophonsignale. In Abhängigkeit empfangener Hydrophonsignale werden demnach vorzugsweise zukünftige Hydrophonsignale geschätzt und daraufhin anhand der empfangenen und/oder geschätzten Hydrophonsignale ein Kompressionsverfahren ausgewählt oder erzeugt, dass für die zukünftigen Hydrophonsignale besonders geeignet ist. Hierbei wird somit ein Kompressionsverfahren ausgewählt oder erzeugt, das gegenüber mindestens einem alternativen Kompressionsverfahren mindestens eines der hinterlegten oder bereits zuvor erzeugten Kompressionsverfahren einen höheren Kompressionsgrad für die zukünftigen Hydrophonsignale aufweist.

Durch Schätzung zukünftiger Hydrophonsignale auf Grundlage empfangener Hydrophonsignale kann in vorteilhafter Weise ein Kompressionsverfahren ausgewählt werden, das einen möglichst großen Kompressionsgrad auch für in der Zukunft empfangene Hydrophonsignale erreicht wird.

Gemäß einer weiteren Ausführungsform wird das aktuell verwendete Kompressionsverfahren bewertet. Diese Bewertung findet ständig, durch ein Ereignis ausgelöst oder in Zeitintervallen wiederholt, statt. Zur Bewertung wird der Kompressionsgrad des aktuell verwendeten Kompressionsverfahrens bestimmt. Gemäß dieser Ausführungsform wird im Falle, dass der Kompressionsgrad unterhalb eines vorbestimmten Schwellenwerts liegt, das aktuelle Kompressionsverfahren ausgetauscht.

Demnach wird also ständig durch Bestimmen des Kompressionsgrades überprüft, ob das zurzeit als aktuelles Kompressionsverfahren ausgewählte Kompressionsverfahren noch geeignet ist, um in Abhängigkeit der Empfangssituation der Hydrophone einen ausreichend guten Kompressionsgrad zu bieten. Wird dabei ein Kompressionsgrad detektiert, der unterhalb eines Schwellenwerts liegt und somit als nicht ausreichend angesehen wird, wird das zurzeit verwendete Kompressionsverfahren durch ein anderes, vorzugsweise besser geeignetes Kompressionsverfahren ersetzt. Hierdurch ist gewährleistet, dass zu jeder Situation ein geeignetes Kompressionsverfahren ausgewählt ist.

Gemäß einer weiteren Ausführungsform wird das aktuell verwendete Kompressionsverfahren von der Mikrocontrollerschaltung an die Auswerteeinheit übertragen. Hierbei umfasst das verwendete Kompressionsverfahren beispielsweise eine Codierung und wird insbesondere durch Codetabellen dargestellt, sodass dann die Codetabellen von der Mikrocontrollerschaltung an die Auswerteeinheit übertragen werden.

Die Mikrocontrollerschaltung ist somit eingerichtet, neben den Sonardaten, die unmittelbar nach der Digitalisierung und Komprimierung aus den Hydrophonsignalen erzeugt werden, auch weitere Daten an die Auswerteeinheit zu senden oder zu übertragen. Diese weiteren Daten enthalten gemäß der vorliegenden Ausführungsform Informationen über das aktuell verwendete Kompressionsverfahren. Diese Informationen umfassen beispielsweise den Typ des Kompressionsverfahrens und/oder Codetabellen und/oder Konstanten und/oder Variablen, die beim Kompressionsverfahren eingesetzt werden, sowie weitere Informationen, die die Auswerteeinheit benötigt, um die komprimierten Hydrophonsignale in den Sonardaten wieder zu dekomprimieren oder decodieren, so dass eine Auswertung in der Auswerteeinheit erfolgen kann.

Vorzugsweise findet die Übertragung des Kompressionsverfahrens von der Mikrocontrollerschaltung an die Auswerteeinheit nur dann statt, wenn das aktuelle Kompressionsverfahren variiert oder ausgetauscht wird. Sobald also beispielsweise die Mikrocontrollerschaltung erfasst, dass der Kompressionsgrad des aktuell verwendeten Kompressionsverfahrens unterhalb des vordefinierten Schwellenwerts liegt und das aktuell verwendete Kompressionsverfahren variiert oder ausgetauscht wird, wird im Wesentlichen parallel zum Austausch der Auswerteeinrichtung von der Mikrocontrollerschaltung mitgeteilt, dass die Variationen oder das der Austausch des aktuell verwendeten Kompressionsverfahrens erfolgt ist oder erfolgen wird. Außerdem teilt die Mikrocontrollerschaltung der Auswerteeinheit den Zeitpunkt des Austauschs und das Kompressionsverfahren, also Informationen über das Kompressionsverfahren, mit, das nun anstatt dem aktuell verwendeten Kompressionsverfahren als neues aktuelles Kompressionsverfahren verwendet wird oder werden soll.

Gemäß einer weiteren Ausführungsform umfasst das Kompressionsverfahren eine räumliche Kompression, bei der die relativen Positionen mindestens zweier oder aller der Hydrophone bei der Kompression berücksichtigt werden. Hierdurch wird ermöglicht, dass nicht der komplette Signalverlauf jedes Hydrophonsignals mit den Sonardaten übertragen werden muss.

Gemäß einer besonders vorteilhaften Ausführungsform werden zur Berücksichtigung der relativen Positionen die sich durch die unterschiedlichen Positionen der Hydrophone ergebenen Laufzeitdifferenzen und/oder Amplitudendifferenzen mindestens zweier der Hydrophonsignale bestimmt. Somit wird den Sonardaten beim Komprimieren zumindest die bestimmte Laufzeitdifferenz und/oder Amplitudendifferenz der mindestens beiden Hydrophonsignale beigefügt.

Es ist demnach beispielsweise vorstellbar, dass ein einzelnes Hydrophonsignal eines einzelnen Hydrophons sowie sämtliche Laufzeitdifferenzen und/oder Amplitudendifferenzen der anderen Hydrophonsignale in die Sonardaten eingefügt werden. Hierdurch lassen sich in der Auswerteeinheit alle Hydrophonsignale rekonstruieren, ohne dass alle kompletten Signalverläufe der Hydrophonsignale von der Mikrocontrollereinheit übertragen werden müssen.

Gemäß einer weiteren Ausführungsform umfasst das Kompressionsverfahren eine zeitliche Kompression. Bei der zeitlichen Kompression werden sich wiederholende Signalverläufe der einzelnen Hydrophonsignale berücksichtigt. Vorteilhafterweise wird also ausgenutzt, dass die Hydrophonsignale Geräusche mit konstanten Frequenzen in Form von Schallwellen aufnehmen. Durch den sinusförmigen Verlauf von Schallwellen wiederholen sich demnach auch die zeitlichen Verläufe der Signale. Diese Wiederholungen können zur Kompression verwendet werden.

Gemäß einer weiteren Ausführungsform werden zur Berücksichtigung der sich wiederholenden Signalverläufe Zeitfenster für eines oder mehrere der Hydrophonsignale bestimmt, in denen sich die Signalverläufe im Wesentlichen wiederholen. Hieraus werden dann Sonardaten für das jeweilige Hydrophon bei der Kompression erzeugt, die zumindest den sich wiederholenden Signalverlauf rekonstruierbar enthalten. Außerdem enthalten die Sonardaten die Anzahl an Zeitfenstern, in denen sich der Signalverlauf im Wesentlichen wiederholt.

Es wird also berücksichtigt, dass ein bereits einmal übertragener Signalverlauf eines Hydrophonsignals nicht ein zweites Mal übertragen werden muss, wenn dieser identisch ein zweites Mal auftritt. Vielmehr genügt es mitzuteilen, dass der Signalverlauf ein zweites Mal, nämlich in einem zweiten Zeitfenster, auftritt.

Gemäß einer weiteren Ausführungsform kann das Kompressionsverfahren auch eine räumliche und zeitliche Kompression gleichzeitig enthalten, bei der einerseits die relativen Positionen zweier oder aller Hydrophone berücksichtigt wird bzw. werden und andererseits der zeitlich wiederholte Signalverlauf jedes einzelnen oder zumindest mehrerer der Hydrophone berücksichtigt wird.

Gemäß einer weiteren Ausführungsform umfasst zumindest eines der Kompressionsverfahren einen Vergleich von mindestens zwei Hydrophonsignalen, um Übereinstimmungen der Hydrophonsignale zu detektieren und auf Basis dieser Übereinstimmungen unterschiedlicher Hydrophonsignale ein geeignetes Kompressionsverfahren auszuwählen.

Vorzugsweise erfolgt der Vergleich der Hydrophonsignale durch ein Korrelationsverfahren, also durch Korrelation der Hydrophonsignale. Ein Korrelationsverfahren bietet den Vorteil einer leicht implementierbaren mathematischen Methode für die Mikrocontrollerschaltung, die zuverlässig eine Übereinstimmung oder Ähnlichkeit von Hydrophonsignalen bestimmen kann.

Gemäß einer weiteren Ausführungsform umfasst zumindest eines der Kompressionsverfahren ein Audiodatenkompressionsverfahren, das vorzugsweise verlustlos ist. Insbesondere wird beispielsweise das "Free Lossless Audio Codec (FLAC)"-Verfahren verwendet.

Gemäß einer weiteren Ausführungsform wird zumindest eines der Hydrophonsignale zumindest eines Hydrophons grundsätzlich verlustfrei komprimiert. Hierdurch wird gewährleistet, dass ein Intercept, also ein Ping, der ein kurzer Ton mit einer hohen Amplitude ist, sicher und ohne wesentliche Zeitverzögerung detektiert wird.

Außerdem betrifft die Erfindung eine Sonaranlage für ein Unterwasserfahrzeug gemäß Anspruch 14.

Die Sonaranlage ist vorzugsweise eingerichtet, um das erfindungsgemäße Verfahren gemäß einer der vorgenannten Ausführungsformen auszuführen. Die Sonaranlage dient zum Empfangen und Auswerten von Wasserschall und weist hierzu mehrere Hydrophone auf. Mit den Hydrophonen werden Schallwellen in Hydrophonsignale umgewandelt. Außerdem umfasst die Sonaranlage eine Auswerteeinheit, die zum Auswerten von Sonardaten dient.

Die Sonaranlage umfasst zudem mindestens eine Mikrocontrollerschaltung, die zum Umwandeln der Hydrophonsignale in Sonardaten dient. Das Umwandeln der Hydrophonsignale umfasst hierbei ein Digitalisieren und Komprimieren der Hydrophonsignale. Außerdem ist die Mikrocontrollerschaltung eingerichtet, ein Kompressionsverfahren, das beim Komprimieren aktuell verwendet wird, in Abhängigkeit der Hydrophonsignale durch die Mikrocontrollerschaltung auszutauschen.

Weitere Ausführungsformen ergeben sich anhand der in den Figuren näher erläuterten Ausführungsbeispiele. Es zeigen
- Fig. 1: ein Ausführungsbeispiel einer Sonaranlage,
- Fig. 2: den Ablauf eines Verfahrens gemäß einem Ausführungsbeispiel,
- Fig. 3: die Schritte des Umwandelns gemäß einem Ausführungsbeispiel und
- Fig. 4: einen Signalverlauf eines Hydrophonsignals.

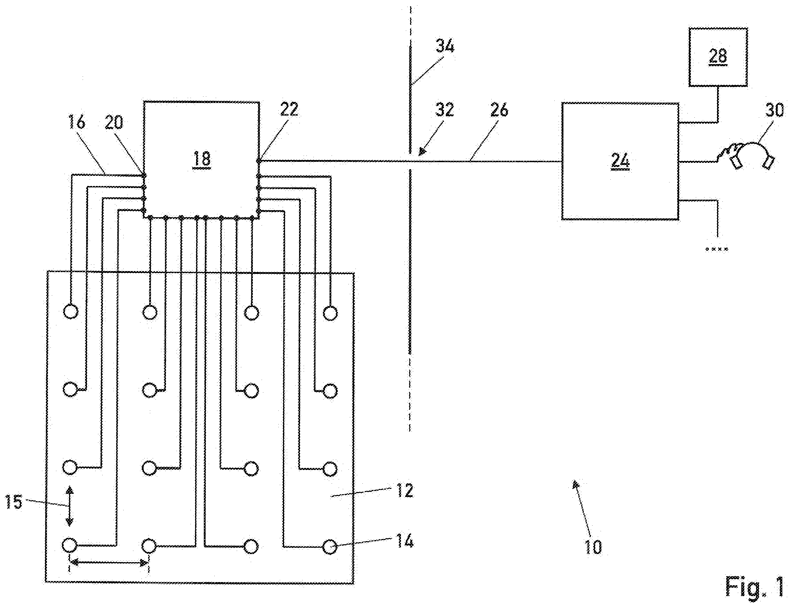

Fig. 1 zeigt ein Ausführungsbeispiel einer Sonaranlage 10. Die Sonaranlage umfasst eine Unterwasserantenne 12, die eingerichtet ist sich unter Wasser ausbreitenden Schall zu empfangen und in elektrische Signale umzuwandeln. Hierzu umfasst die Sonaranlage Unterwassermikrofone, die auch Hydrophone 14 genannt werden.

Die Unterwasserantenne 12 im vorliegenden Ausführungsbeispiel umfasst 16 Hydrophone 14, wobei gemäß weiteren alternativen Ausführungsbeispielen auch Unterwasserantennen 12 mit mehr als 16 Hydrophonen 14 möglich sind. Die Hydrophone 16 weisen relative Positionen 15 zueinander auf.

Die Hydrophone 14 sind über elektrische Leitungen 16 mit einer Mikrocontrollerschaltung 18 verbunden. Jedes der Hydrophone 14 ist mit seiner entsprechenden elektrischen Leitung 16 mit einem analogen Eingang 20 der Mikrocontrollerschaltung 18 verbunden. Demnach werden der Mikrocontrollerschaltung 18 Hydrophonsignale durch die elektrischen Leitungen 16 über die analogen Eingänge 20 zugeführt.

In der Mikrocontrollerschaltung 18 werden die analogen Hydrophonsignale zunächst digitalisiert und dann komprimiert. Hierzu umfasst jeder der analogen Eingänge 20 einen Analogdigitalwandler, der hier zur besseren Übersicht nicht dargestellt ist. Die digitalen Hydrophonsignale werden dann einem Prozessor zugeführt, der aus den digitalen Hydrophonsignalen ein komprimiertes Signal erzeugt, das hier als Sonardaten bezeichnet wird.

Die Sonardaten werden dann in digitaler Form an einem Ausgang 22 der Mikrocontrollerschaltung 18 ausgegeben. Der Ausgang 22 der Mikrocontrollerschaltung 18 ist ferner mit einer Auswerteeinheit 24 über eine elektrische Datenleitung 26 verbunden. In der Auswerteeinheit 24 werden die komprimierten Hydrophonsignale dekomprimiert und ausgewertet, so dass diese über eine Anzeige 28 grafisch oder über einen Kopfhörer 30 akustisch dargestellt werden. Anstatt dem Kopfhörer 30 ist auch ein einfacher Lautsprecher gemäß einem anderen Ausführungsbeispiel möglich.

Die elektrische Datenleitung 26 zwischen der Mikrocontrollerschaltung 18 und der Auswerteeinheit 24 führt hierbei durch eine Öffnung 32 in der Wandung 34 des Druckkörpers eines Unterwasserfahrzeugs.

Demnach befinden sich die Mikrocontrollerschaltung 18, die Unterwasserantenne 12 und die elektrischen Leitungen 16 zwischen der Unterwasserantenne 12, nämlich den Hydrophonen 14 der Unterwasserantenne 12, und der Mikrocontrollerschaltung 18 außerhalb des Druckkörpers und somit außerhalb der Wandung 34 des Unterwasserfahrzeugs. Die Auswerteeinheit 24 sowie die Anzeige 28 und der Kopfhörer 30 befinden sich dem gegenüber innerhalb des Druckkörpers, also auf der anderen Seite der Wandung 34 des Druckkörpers des Unterwasserfahrzeugs. Da bei großer Tauchtiefe des Unterwasserfahrzeugs eine hohe Druckkraft auf die Wandung 34 durch den Wasserdruck ausgeübt wird, ist es vorteilhaft die Öffnung 32 möglichst klein zu wählen und die Anzahl derartiger Öffnungen 32 gering zu halten, um einer Implosion des Druckkörpers entgegenzuwirken.

In der Fig. 1 ist eine einzelne Mikrocontrollerschaltung 18 dargestellt, die mit einer Unterwasserantenne 12 über elektrische Leitungen 16 verbunden ist. Diese Erfindung ist nicht darauf beschränkt einen einzelnen Mikrocontroller und eine einzelne Unterwasserantenne zu verwenden. Vielmehr sind auch mehrere Mikrocontrollerschaltungen 18 denkbar, die jeweils mit einer Anzahl von Hydrophonen 14 verbunden sind. Hierbei sind jedoch vorzugsweise alle elektrischen Datenleitungen der weiteren Mikrocontrollerschaltungen 18 mit der gleichen Auswerteeinheit 24 verbunden. Hierbei werden die elektrischen Datenleitungen 26 der weiteren Mikrocontrollerschaltungen 18 entweder durch die gleiche Öffnung 32, oder durch weitere Öffnungen 32 hindurchgeführt.

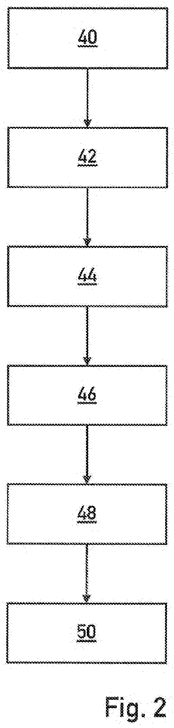

Fig.2 zeigt den grundsätzlichen Ablauf des Verfahrens, wie er beispielsweise mit einer Sonaranlage 10, wie sie in Fig. 1 dargestellt ist, ausgeführt wird. In einem Empfangsschritt 40 werden Schallwellen von Hydrophonen 14 empfangen und in elektrische Signale, nämlich Hydrophonsignale gewandelt. Die Hydrophonsignale werden einer Mikrocontrollerschaltung 18 zugeführt und in einem nach dem Empfangsschritt 40 folgenden Umwandlungsschritt 42 in Sonardaten umgewandelt. Die Sonardaten werden dann an eine Auswerteeinheit 24 von der Mikrocontrollerschaltung 18 in einem Übertragungsschritt 44 übertragen. In einem Dekomprimierschritt 46 werden die Sonardaten dekomprimiert, so dass sie in einem Auswerteschritt 48 ausgewertet werden. Im Ausgabeschritt 50 werden die ausgewerteten Sonardaten dann akustisch oder optisch ausgegeben.

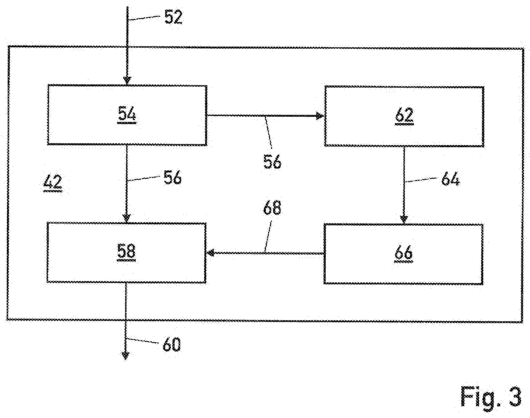

In Fig. 3 ist nun der Umwandlungsschritt 42, wie er in der Mikrocontrollerschaltung 18 ausgeführt wird detailliert dargestellt. Die Hydrophonsignale 52 werden dem Umwandlungsschritt 42 zugeführt und in einem Analog-Digital-Wandelschritt 54 in digitale Signale 56 umgewandelt. Die digitalen Signale 56 werden in einem Komprimierschritt 58, der auch Kompressionsschritt 58 genannte werden kann, mittels eines Kompressionsverfahrens komprimiert und als Sonardaten 60 ausgegeben.

Die im Analog-Digital-Wandelschritt 54 digital gewandelten Hydrophonsignale 56 werden zudem einem Schätzschritt 62 zugeführt. In dem Schätzschritt 62 werden auf Grundlage der Hydrophonsignale zukünftige Hydrophonsignale 64 geschätzt. Im Auswahlschritt 66 wird auf Grundlage der geschätzten Hydrophonsignale 64 eines von mehreren, vorzugsweise in einem Speicher hinterlegten, Kompressionsverfahren ausgewählt und das ausgewählte Kompressionsverfahren dem Komprimierschritt 58 als aktuelles Kompressionsverfahren 68 zugeführt. Im Kompressionsschritt 58 wird entsprechend die Kompression der digitalen Signale 56 mittels des ausgewählten Kompressionsverfahrens 68 durchgeführt.

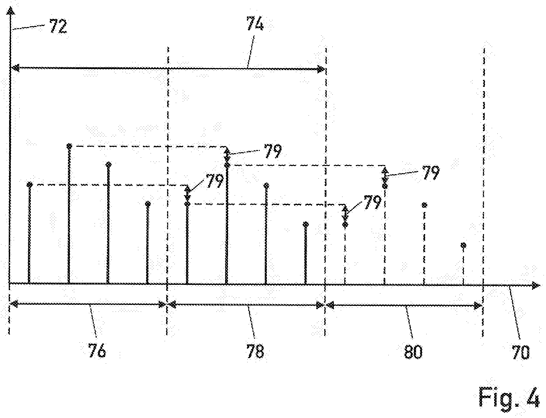

Anhand von Fig. 4 ist dargestellt, wie zum Beispiel ein Hydrophonsignal geschätzt werden kann. Hierzu ist über eine Zeitachse 70 sowie eine Amplitudenachse 72 im Zeitraum 74 eine zeitliche Signalfolge eines digitalisierten Hydrophonsignals 56 dargestellt. Es wird nun durch Auswerten dieses Zeitraums 74 festgestellt, dass die sich die Signalfolge, die im Zeitraum 76 enthalten ist, sich im Zeitraum 78 wiederholt.

Demnach wird ein Zeitfenster 76 festgelegt. Es ist jedoch ferner feststellbar, dass die Signalfolge im Fenster 78 eine geringere Amplitude aufweist, als im Zeitfenster 76. Die einzelnen Amplituden der Zeiträumen 76 und 78 weisen demnach die Differenz 79 auf. Demnach kann nun davon ausgegangen werden, dass mit einer großen Wahrscheinlichkeit im auf den Zeitraum 78 folgenden Zeitraum 80 diese Signalfolge ebenfalls wiederholt wird, wobei die Amplituden verhältnismäßig zum Zeitraum 78 weiter um die Differenz 79 abfallen. Gleiches gilt für auf den Zeitraum 80 folgende Zeiträume. Somit kann nun anstatt dem hier dargestellten Hydrophonsignal auch die Signalfolge des Zeitraums 76 übertragen werden und für die darauffolgenden Zeiträume 80 werden lediglich die Amplitudendifferenzen der Signale zum vorhergehenden Zeitfenster übertragen.

Für den Fall, dass nun eine komplett von der hier dargestellten Signalfolge unterschiedliche Signalfolge übertragen wird, werden diese Differenzen so groß, dass das hier verwendete Kompressionsverfahren nicht mehr optimal ist. Dies wird dann vom Mikrokontroller, der regelmäßig den Kompressionsgrad prüft, detektiert und es wird ein anderes Kompressionsverfahren ausgewählt.

### Bezugszeichenliste

- 10: Sonaranlage
- 12: Unterwasserantenne
- 14: Hydrophone
- 16: elektrische Leitungen
- 18: Mikrocontrollerschaltung
- 20: analoger Eingang
- 22: Ausgang
- 24: Auswerteeinheit
- 26: elektrische Datenleitung
- 28: Anzeige
- 30: Kopfhörer
- 32: Öffnung
- 34: Wandung
- 40: Empfangsschritt
- 42: Umwandlungsschritt
- 44: Übertragungsschritt
- 46: Dekomprimierschritt
- 48: Auswerteschritt
- 50: Ausgabeschritt
- 52: Hydrophonsignale
- 54: Analog-Digital-Wandelschritt
- 56: Signale
- 58: Komprimierschritt
- 62: Schätzschritt
- 64: geschätzte Hydrophonsignale
- 66: Auswahlschritt
- 68: Kompressionsverfahren
- 70: Zeitachse
- 72: Amplitudenachse
- 74, 78, 80: Zeitraum
- 79: Amplitudendifferenz

## Patentansprüche

1. Verfahren zum Übertragen von Sonardaten (60) an eine Auswerteeinheit (24) einer Sonaranlage (10), umfassend die Schritte:
- Umwandeln von Schallwellen in Hydrophonsignale (52) mit mehreren Hydrophonen (14);
- Umwandeln (42) der Hydrophonsignale (52) in Sonardaten (60) mit mindestens einer Mikrocontrollerschaltung (18),
- Übertragen (44) der Sonardaten (60) an eine Auswerteeinheit (24), und
- Auswerten (48) der Sonardaten (60) in der Auswerteeinheit (24), wobei das Umwandeln (42) der Hydrophonsignale (52) ein Digitalisieren (44) und Komprimieren (58) der Hydrophonsignale (52) umfasst;
**gekennzeichnet dadurch, dass**
es sich bei der Sonaranlage (10) um die Sonaranlage (10) eines Unterwasserfahrzeugs handelt;
und das beim Komprimieren (58) aktuell verwendete Kompressionsverfahren (68) in Abhängigkeit der Hydrophonsignale (52) durch die Mikrocontrollerschaltung (18) ausgetauscht wird wie folgt:
- Einsetzen eines Kompressionsverfahrens im stationären Zustand, wobei das Kompressionsverfahren in dem stationären Zustand, bei dem die Sonaranlage sowie Ziele in der Umgebung eine unveränderte Position zueinander aufweisen, zu einem höheren Kompressionsgrad führt, als ein anderes Kompressionsverfahren;
- Einsetzen des anderen Kompressionsverfahrens, wenn sich die Ziele schnell bewegen, wobei das andere Kompressionsverfahren in dieser Situation zu einem höheren Kompressionsgrad führt als das Kompressionsverfahren.

2. Verfahren nach Anspruch 1, wobei mehrere verschiedene Kompressionsverfahren (68) in der Mikrocontrollerschaltung (18) hinterlegt sind und die Mikrocontrollerschaltung (18) in Abhängigkeit der Hydrophonsignale (52) eines der Kompressionsverfahren (68) auswählt und das ausgewählte Kompressionsverfahren (66) beim Komprimieren (58) der Hydrophonsignale (52) verwendet wird.

3. Verfahren nach Anspruch 1, wobei die Mikrocontrollerschaltung (18) in Abhängigkeit der Hydrophonsignale (52) ein Kompressionsverfahren (68) erzeugt und das erzeugte Kompressionsverfahren (68) beim Komprimieren (58) der Hydrophonsignale (52) verwendet wird.

4. Verfahren nach Anspruch 2 oder 3, wobei das Auswählen (66) oder Erzeugen des Kompressionsverfahrens (68) in Abhängigkeit der Hydrophonsignale (52) erfolgt, in dem in Abhängigkeit empfangener Hydrophonsignale (52) zukünftige Hydrophonsignale (64) geschätzt (62) werden und anhand der empfangenen Hydrophonsignale (52) und/oder der geschätzten Hydrophonsignale (64) ein Kompressionsverfahren (68) ausgewählt (66) oder erzeugt wird, das eine für die geschätzten Hydrophonsignale geeigneten Kompressionsgrad aufweist.

5. Verfahren nach einem der vorhergehenden Ansprüche, wobei ständig, durch ein Ereignis ausgelöst oder in Zeitintervallen das aktuell verwendete Kompressionsverfahren (68) durch Bestimmen eines Kompressionsgrades bewertet wird und im Falle, dass der Kompressionsgrad unterhalb eines vorbestimmten Schwellenwertes liegt, das beim Komprimieren (58) aktuell verwendete Kompressionsverfahren (68) ausgetauscht wird.

6. Verfahren nach einem der vorhergehenden Ansprüche, wobei das aktuell verwendete Kompressionsverfahren (68) von der Mikrocontrollerschaltung (18) an die Auswerteeinheit (24) übertragen wird, wobei das verwendete Kompressionsverfahren (68) insbesondere durch Codetabellen definiert ist.

7. Verfahren nach einem der vorhergehenden Ansprüche, wobei das Kompressionsverfahren (68) eine räumliche Kompression umfasst, die die relativen Positionen (15) mindestens zweier oder aller der Hydrophone (14) bei der Komprimierung (58) berücksichtigt.

8. Verfahren nach Anspruch 7, wobei zur Berücksichtigung der relativen Positionen (15) sich durch die unterschiedlichen Positionen ergebende Laufzeitdifferenzen und/oder Amplitudendifferenzen mindestens zweier der Hydrophonsignale (52) bestimmt werden und die Sonardaten (60) zumindest die bestimmten Laufzeitdifferenzen und/oder Amplitudendifferenzen enthalten.

9. Verfahren nach einem der vorhergehenden Ansprüche, wobei das Kompressionsverfahren (68) eine zeitliche Kompression umfasst und bei der Komprimierung (58) sich zeitlich wiederholende Signalverläufe der Hydrophonsignale (52) berücksichtigt werden.

10. Verfahren nach Anspruch 9, wobei zur Berücksichtigung der Signalverläufe Zeitfenster (76, 78) für eines oder mehrere der Hydrophonsignale (52) bestimmt werden, in denen sich ein Signalverlauf im Wesentlichen wiederholt und Sonardaten für die Hydrophonsignale (52) eines Hydrophons (14) bei der Komprimierung (58) erzeugt werden, die zumindest den sich wiederholenden Signalverlauf und insbesondere auch eine Anzahl von Fenstern (76, 78), in denen sich der Signalverlauf im Wesentlichen wiederholt, enthalten.

11. Verfahren nach einem der vorhergehenden Ansprüche, wobei zumindest eines der bei der Komprimierung (58) verwendeten Kompressionsverfahren (68) einen Vergleich von mindestens zwei Hydrophonsignalen (52) umfasst und wobei insbesondere zum Vergleich der Hydrophonsignale ein Korrelationsverfahren eingesetzt wird.

12. Verfahren nach einem der vorhergehenden Ansprüche, wobei zumindest eines der Kompressionsverfahren (68) ein Audiodatenkompressionsverfahren, das vorzugsweise verlustlos ist, insbesondere das Free-Lossless-Audio-Codec (FLAC) Verfahren, verwendet.

13. Verfahren nach einem der vorhergehenden Ansprüche, wobei die Hydrophonsignale (52) zumindest eines Hydrophons (14) verlustfrei komprimiert werden.

14. Sonaranlage (10) zum Empfangen und Auswerten von Wasserschall, wobei die Sonaranlage (10) insbesondere zur Durchführung eines Verfahrens nach einem der vorhergehenden Ansprüche ausgebildet ist, und die Sonaranlage (10) umfasst:
- mehrere Hydrophone (14) zum Umwandeln von Schallwellen in Hydrophonsignale (52),
- eine Auswerteeinheit (24) zum Auswerten von Sonardaten (60),
- mindestens eine Mikrocontrollerschaltung (18) zum Umwandeln der Hydrophonsignale (52) in Sonardaten (60), wobei die Mikrocontrollerschaltung (18) eingerichtet ist, die von den Hydrophonen (14) empfangenen Hydrophonsignale (52) zu digitalisieren, zu komprimieren und als Sonardaten (60) auszugeben,
**gekennzeichnet dadurch, dass**
es sich bei der Sonaranlage (10) um die Sonaranlage (10) eines Unterwasserfahrzeugs handelt;
und die Mikrocontrollerschaltung (18) außerdem dazu eingerichtet ist, das beim Komprimieren aktuell verwendete Kompressionsverfahren in Abhängigkeit der Hydrophonsignale durch die Mikrocontrollerschaltung (18) auszutauschen, wobei die Mikrocontrollerschaltung ausgebildet ist, ein Kompressionsverfahren im stationären Zustand einzusetzen, wobei das Kompressionsverfahren in dem stationären Zustand, bei dem die Sonaranlage sowie Ziele in der Umgebung eine unveränderte Positionen zueinander aufweisen, zu einem höheren Kompressionsgrad führt, als ein anderes Kompressionsverfahren und das andere Kompressionsverfahren einzusetzen, wenn sich die Ziele schnell bewegen, wobei das andere Kompressionsverfahren in dieser Situation zu einem höheren Kompressionsgrad führt als das Kompressionsverfahren.

15. Sonaranlage nach Anspruch 14, wobei die Mikrocontrollerschaltung (18) ein FPGA, vorzugsweise mit 16, 64, oder 256 Eingängen (20) ist.

## Claims

1. Method for transmitting sonar data (60) to an evaluation unit (24) of a sonar system (10) comprising the steps of:
- Converting sound waves into hydrophone signals (52) with several hydrophones (14);
- Converting (42) the hydrophone signals (52) into sonar data (60) with at least one microcontroller circuit (18),
- Transmitting (44) the sonar data (60) to an evaluation unit (24), and
- Evaluation (48) of the sonar data (60) in the evaluation unit (24), the conversion (42) of the hydrophone signals (52) comprising digitizing (44) and compressing (58) the hydrophone signals (52), **characterized in that** the sonar system (10) is the sonar system (10) of an underwater vehicle and the compression method (68) currently used during compression (58) is exchanged as a function of the hydrophone signals (52) by the microcontroller circuit (18) as follows:
- Use of a compression method in the stationary state, wherein the compression method results in a higher degree of compression than another compression method in the stationary state in which the sonar system and targets in the environment have an unchanged position relative to each other;
- Use of the other compression method when the targets are moving quickly, whereby the other compression method results in a higher degree of compression than the compression method in this situation.

2. Method according to claim 1, wherein several different compression methods (68) are stored in the microcontroller circuit (18) and the microcontroller circuit (18) selects one of the compression methods (68) as a function of the hydrophone signals (52) and the selected compression method (66) is used when compressing (58) the hydrophone signals (52).

3. The method according to claim 1, wherein the microcontroller circuit (18) generates a compression method (68) depending on the hydrophone signals (52) and the generated compression method (68) is used in compressing (58) the hydrophone signals (52).

4. Method according to claim 2 or 3, wherein the compression method (68) is selected (66) or generated as a function of the hydrophone signals (52), in which future hydrophone signals (64) are estimated (62) as a function of received hydrophone signals (52) and a compression method (68) is selected (66) or generated on the basis of the received hydrophone signals (52) and/or the estimated hydrophone signals (64), which compression method (68) has a degree of compression suitable for the estimated hydrophone signals.

5. Method according to one of the preceding claims, wherein the currently used compression method (68) is evaluated continuously, triggered by an event or at time intervals by determining a degree of compression and, in the event that the degree of compression is below a predetermined threshold value, the compression method (68) currently used during compression (58) is exchanged.

6. Method according to one of the preceding claims, wherein the currently used compression method (68) is transmitted from the microcontroller circuit (18) to the evaluation unit (24), wherein the used compression method (68) is defined in particular by code tables.

7. The method according to any one of the preceding claims, wherein the compression method (68) comprises a spatial compression that takes into account the relative positions (15) of at least two or all of the hydrophones (14) in the compression (58).

8. Method according to claim 7, wherein, in order to take into account the relative positions (15), transit time differences and/or amplitude differences resulting from the different positions are determined for at least two of the hydrophone signals (52) and the sonar data (60) contain at least the determined transit time differences and/or amplitude differences.

9. The method according to any one of the preceding claims, wherein the compression method (68) comprises a temporal compression and the compression (58) takes into account temporally repeating signal characteristics of the hydrophone signals (52).

10. The method according to claim 9, wherein time windows (76, 78) are determined for one or more of the hydrophone signals (52) in which a signal curve is substantially repeated in order to take the signal curves into account, and sonar data are generated for the hydrophone signals (52) of a hydrophone (14) during compression (58), which sonar data contain at least the repeating signal curve and in particular also a number of windows (76, 78) in which the signal curve is substantially repeated.

11. The method according to any one of the preceding claims, wherein at least one of the compression methods (68) used in the compression (58) comprises a comparison of at least two hydrophone signals (52), and wherein a correlation method is used in particular to compare the hydrophone signals.

12. The method according to any one of the preceding claims, wherein at least one of the compression methods (68) uses an audio data compression method which is preferably lossless, in particular the Free Lossless Audio Codec (FLAC) method.

13. The method according to any one of the preceding claims, wherein the hydrophone signals (52) of at least one hydrophone (14) are compressed without loss.

14. Sonar system (10) for receiving and evaluating waterborne sound, the sonar system (10) being designed in particular for carrying out a method according to one of the preceding claims, and comprising the sonar system (10):
- a plurality of hydrophones (14) for converting sound waves into hydrophone signals (52),
- an evaluation unit (24) for evaluating sonar data (60),
- at least one microcontroller circuit (18) for converting the hydrophone signals (52) into sonar data (60), the microcontroller circuit (18) being arranged to digitize and compress the hydrophone signals (52) received from the hydrophones (14) and to output them as sonar data (60), **characterized in that in that** the sonar system (10) is the sonar system (10) of an underwater vehicle and the microcontroller circuit (18) is also set up to exchange the compression method currently used during compression as a function of the hydrophone signals by the microcontroller circuit (18), wherein the microcontroller circuit is adapted to use one compression method in the stationary state, the compression method resulting in a higher degree of compression than another compression method in the stationary state in which the sonar system and targets in the environment have unchanged positions relative to each other, and to use the other compression method when the targets are moving rapidly, the other compression method resulting in a higher degree of compression than the compression method in this situation.

15. The sonar system according to claim 14, wherein the microcontroller circuit (18) is an FPGA, preferably with 16, 64, or 256 inputs (20).

## Revendications

1. Procédé de transmission de données de sonar (60) à une unité d'évaluation (24) d'une installation de sonar (10) comprenant les étapes suivantes :
- convertir des ondes sonores en signaux d'hydrophones (52) à l'aide de plusieurs hydrophones (14) ;
- convertir (42) les signaux d'hydrophones (52) en données de sonar (60) avec au moins un circuit de microcontrôleur (18),
- transmission (44) des données de sonar (60) à une unité d'évaluation (24), et
- évaluer (48) les données de sonar (60) dans l'unité d'évaluation (24), la conversion (42) des signaux d'hydrophones (52) comprenant une numérisation (44) et une compression (58) des signaux d'hydrophones (52), **caractérisé en ce que** l'installation de sonar (10) est l'installation de sonar (10) d'un véhicule sous-marin et le procédé de compression (68) actuellement utilisé lors de la compression (58) est échangé en fonction des signaux d'hydrophones (52) par le circuit de microcontrôleur (18) comme suit :,
- l'utilisation d'un procédé de compression à l'état stationnaire, le procédé de compression conduisant à un degré de compression plus élevé qu'un autre procédé de compression à l'état stationnaire, dans lequel le sonar ainsi que des cibles dans l'environnement présentent une position inchangée les uns par rapport aux autres ;
- Utiliser l'autre méthode de compression lorsque les cibles se déplacent rapidement, l'autre méthode de compression conduisant à un taux de compression plus élevé que la méthode de compression dans cette situation.

2. Procédé selon la revendication 1, dans lequel plusieurs procédés de compression différents (68) sont enregistrés dans le circuit de microcontrôleur (18) et le circuit de microcontrôleur (18) sélectionne l'un des procédés de compression (68) en fonction des signaux d'hydrophones (52) et le procédé de compression sélectionné (66) est utilisé lors de la compression (58) des signaux d'hydrophones (52).

3. Procédé selon la revendication 1, dans lequel le circuit de microcontrôleur (18) génère un procédé de compression (68) en fonction des signaux d'hydrophones (52) et le procédé de compression (68) généré est utilisé lors de la compression (58) des signaux d'hydrophones (52).

4. Procédé selon la revendication 2 ou 3, dans lequel la sélection (66) ou la génération du procédé de compression (68) s'effectue en fonction des signaux d'hydrophones (52), dans lequel, en fonction des signaux d'hydrophones reçus (52), des signaux d'hydrophones futurs (64) sont estimés (62) et, à l'aide des signaux d'hydrophones reçus (52) et/ou des signaux d'hydrophones estimés (64), un procédé de compression (68) est sélectionné (66) ou généré, lequel présente un degré de compression approprié pour les signaux d'hydrophones estimés.

5. Procédé selon l'une quelconque des revendications précédentes, dans lequel, en permanence, déclenché par un événement ou à des intervalles de temps, le procédé de compression (68) actuellement utilisé est évalué en déterminant un degré de compression et, dans le cas où le degré de compression est inférieur à une valeur de seuil prédéterminée, le procédé de compression (68) actuellement utilisé lors de la compression (58) est remplacé.

6. Procédé selon l'une des revendications précédentes, dans lequel le procédé de compression (68) actuellement utilisé est transmis par le circuit de microcontrôleur (18) à l'unité d'évaluation (24), le procédé de compression (68) utilisé étant notamment défini par des tables de codes.

7. Procédé selon l'une quelconque des revendications précédentes, dans lequel le procédé de compression (68) comprend une compression spatiale qui prend en compte les positions relatives (15) d'au moins deux ou de la totalité des hydrophones (14) lors de la compression (58).

8. Procédé selon la revendication 7, dans lequel, pour tenir compte des positions relatives (15), on détermine des différences de temps de propagation et/ou des différences d'amplitude résultant des différentes positions d'au moins deux des signaux d'hydrophones (52) et les données de sonar (60) contiennent au moins les différences de temps de propagation et/ou les différences d'amplitude déterminées.

9. Procédé selon l'une quelconque des revendications précédentes, dans lequel le procédé de compression (68) comprend une compression temporelle et dans lequel la compression (58) prend en compte des évolutions de signaux répétitives dans le temps des signaux d'hydrophones (52).

10. Procédé selon la revendication 9, dans lequel, pour tenir compte de l'allure des signaux, on détermine des fenêtres temporelles (76, 78) pour un ou plusieurs des signaux d'hydrophones (52), dans lesquelles une allure de signal se répète essentiellement, et on produit des données sonar pour les signaux d'hydrophones (52) d'un hydrophone (14) lors de la compression (58), qui contiennent au moins l'allure de signal qui se répète et notamment également un certain nombre de fenêtres (76, 78) dans lesquelles l'allure de signal se répète essentiellement.

11. Procédé selon l'une quelconque des revendications précédentes, dans lequel au moins l'un des procédés de compression (68) utilisé lors de la compression (58) comprend une comparaison d'au moins deux signaux d'hydrophones (52), et dans lequel on utilise notamment un procédé de corrélation pour comparer les signaux d'hydrophones.

12. Procédé selon l'une quelconque des revendications précédentes, dans lequel au moins l'un des procédés de compression (68) utilise un procédé de compression de données audio, de préférence sans perte, notamment le procédé Free-Lossless Audio-Codec (FLAC).

13. Procédé selon l'une quelconque des revendications précédentes, dans lequel les signaux d'hydrophones (52) d'au moins un hydrophone (14) sont comprimés sans perte.

14. Installation sonar (10) pour la réception et l'évaluation du son de l'eau, l'installation sonar (10) étant conçue en particulier pour la mise en œuvre d'un procédé selon l'une des revendications précédentes, et l'installation sonar (10) comprenant :
- plusieurs hydrophones (14) pour convertir les ondes sonores en signaux d'hydrophones (52),
- une unité d'évaluation (24) pour évaluer les données du sonar (60),
- au moins un circuit de microcontrôleur (18) pour convertir les signaux d'hydrophones (52) en données de sondeur (60), le circuit de microcontrôleur (18) étant conçu pour numériser, comprimer et délivrer les signaux d'hydrophones (52) reçus des hydrophones (14) sous forme de données de sondeur (60), **caractérisé en ce que** , **en ce que** l'installation de sonar (10) est l'installation de sonar (10) d'un véhicule sous-marin et le circuit de microcontrôleur (18) est en outre conçu pour échanger le procédé de compression actuellement utilisé lors de la compression en fonction des signaux d'hydrophones par le circuit de microcontrôleur (18), le circuit de microcontrôleur étant conçu pour utiliser un procédé de compression à l'état stationnaire, le procédé de compression conduisant à un degré de compression plus élevé qu'un autre procédé de compression à l'état stationnaire, dans lequel le sonar ainsi que des cibles dans l'environnement présentent une position inchangée les uns par rapport aux autres, et pour utiliser l'autre procédé de compression lorsque les cibles se déplacent rapidement, l'autre procédé de compression conduisant à un degré de compression plus élevé que le procédé de compression dans cette situation.

15. Sonar selon la revendication 14, dans lequel le circuit de microcontrôleur (18) est un FPGA, de préférence avec 16, 64, ou 256 entrées (20).
